Europäisches Patentamt

European Patent Office

Office européen des brevets

(11) Veröffentlichungsnummer : **0 098 561**
**B1**

# (12) EUROPÄISCHE PATENTSCHRIFT

(45) Veröffentlichungstag der Patentschrift :
10.09.86

(21) Anmeldenummer : 83106463.9

(22) Anmeldetag : 02.07.83

(51) Int. Cl.⁴ : **A 01 N 25/04, A 01 N 25/02**

(54) Phospholipidkonzentrate und ihre Verwendung als Hilfsstoff zum Herstellen von Pflanzenschutzmittel enthaltenden Spritzbrühen.

(30) Priorität : 09.07.82 DE 3225703

(43) Veröffentlichungstag der Anmeldung :
18.01.84 Patentblatt 84/03

(45) Bekanntmachung des Hinweises auf die Patenterteilung : 10.09.86 Patentblatt 86/37

(84) Benannte Vertragsstaaten :
AT BE CH DE FR GB IT LI LU NL SE

(56) Entgegenhaltungen :
EP-A- 0 068 295
EP-A- 0 082 437
WO-A-79 /006 54
DE-A- 3 047 011
CHEMICAL ABSTRACTS, Band 96, Nr. 6, 8. Februar
1982, Seite 364, Nr. 40734f, Columbus, Ohio, USA
Kirk-Othmer, Vol. 14, S. 252 und S. 254-255
Römpps Chemie-Lexikon, 7. Auflage, "Kephaline"
Die Akte enthält technische Angaben, die nach dem
Eingang der Anmeldung eingereicht wurden und die
nicht in dieser Patentschrift enthalten sind.

(73) Patentinhaber : A. Nattermann & Cie. GmbH
Nattermannallee 1
D-5000 Köln 30 (DE)

(72) Erfinder : Ghyczy, Miklos, Dr. Dipl.-Chem.
Am Serviesberg 12
D-5000 Köln 41 (DE)
Erfinder : Imberge, Paul-Robert
Kiefernweg 5
D-5024 Pulheim (DE)
Erfinder : Wendel, Armin
Goethestrasse 29
D-5000 Köln 40 (DE)

(74) Vertreter : Sternagel, Hans-Günther, Dr. et al
Patentanwälte Dr. Michael Hann Dr. H.-G. Sternagel
Sander Aue 30
D-5060 Bergisch Gladbach 2 (DE)

0 098 561

**Beschreibung**

Gegenstand der Erfindung ist ein als Hilfsstoff zum Herstellen und Austragen von Pflanzenschutzmittel-Spritzbrühen geeignetes Phospholipidkonzentrat.

Phospholipide, natürliche oder synthetische, sind bekannt. Es handelt sich um Bestandteile handelsüblicher Lecithine. Phospholipide sind in der Regel plastische, technisch schwer zu verarbeitende Massen, die in organischen Lösungsmitteln, wie z. B. Hexan oder Mineralöl, löslich sind. Chemisch handelt es sich um Phosphatidylcholin, hydrierte Phosphatidylcholine, Phosphatidylethanolamin, N-Acylphosphatidylethanolamine, Phosphatidylinosit, Phosphatidylserin, Phosphatidsäure, Phosphatidylglycerol oder einem Gemisch mehrerer solcher Produkte, wie z. B. Gemische aus Phosphatidylcholin und Phosphatidylethanolamin oder Phosphatidylcholin mit Phosphatidylethanolamin und N-Acylphosphatidylethanolamin oder sonstigen Phosphatidylcholinmischungen. Natürliche Phosphatidylcholine können nach den in folgenden Patenten beschriebenen Verfahren erhalten werden : DE-PS 10 47 597, DE-PS 10 53 299, DE-PS 16 17 679, DE-PS 16 17 680, den deutschen Patentanmeldungen DE-OS 30 47 048, DE-OS 30 47 012 oder DE-OS 30 47 011.

In der japanischen Patentveröffentlichung J 5 6070-826 ist eine Öl-in-mehrwertigem Alkohol-Emulsionszusammensetzung beschrieben, die Lecithin, einen mehrwertigen Alkohol und ein nichtionogenes oberflächenaktives Mittel enhält. Es handelt sich um transparente oder trübe Gele oder hochviskose Flüssigkeiten, die für verschiedene Zwecke einsetzbar sind. Beim Einrühren in Wasser sollen O/W-Emulsionen entstehen. Es hat sich gezeigt, daß sich diese Gele zusammen mit Pflanzenschutzmitteln nicht problemlos zu Spritzbrühen verdünnen lassen.

Für bestimmte Anwendungszwecke sind flüssige Zubereitungen von Phospholipidkonzentraten erwünscht, die sich leicht und mit einfachen Mitteln in wässerige Systeme, wie beispielsweise Pflanzenschutzmittelspritzbrühen, einbringen lassen.

Aufgabe der Erfindung ist es, eine Zusammensetzung eines Phospholipidkonzentrates zu schaffen, das sich mit einfachen Mitteln in wässerige Systeme einmischen läßt und mit darin enthaltenen Wirkstoffen verträglich ist.

Diese Aufgabe wird gelöst durch die als Hilfsstoff geeigneten Phospholipidkonzentrate bestehend aus 5-60 Gew.% natürlichem oder synthetischem Phospholipid aus der Gruppe Phosphatidylcholin, hydriertes Phosphatidylcholin, Phosphatidylethanolamin, N-Acylphosphatidylethanolamin, Phosphatidylinosit, Phosphatidylserin und Phosphatidylglycerol, Phosphatidsäure und Gemische solcher Produkte, 5-62,5 Gew.% physiologisch unbedenklichem Lösungsmittel aus der Gruppe $C_1$-$C_4$ Alkylalkohole, Ethylenglykolmonoethylether, Ethylenglykolmonomethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Polypropylenglykole, Polypropylenglykolmonomethylether, Polypropylenglykolmonoethylether, Propylenglykolmethylether, Propylenglykoldiethylether, Ethylenglykol, Butylenglykol, 3,5,5-Trimethyl-2-cyclohexen-1-on, Tetrahydrofuran, Dioxan, Dimethylsulfoxid oder einem Gemisch solcher Lösungsmittel, bis zu 30 Gew.% nicht-ionogener Co-Emulgator aus der Gruppe Ethoxylate von Fettalkoholen, hydriertem Rizinusöl, Nonylphenol oder Fettsäureamiden, bis zu 35 Gew.% Lösungsvermittler aus der Gruppe Sorbitanfettsäureester, Triglycerid- oder Partialglyceridgemisch gesättigter Fettsäuren und Hydroxyethylamide, wobei nichtionogener Co-Emulgator und Lösungsvermittler als wesentliche Komponenten anwesend sind, 10-23 Gew.% Glycerin und gegebenenfalls bis zu 15 Gew.% Wasser und bzw. oder bis zu 25 Gew.% pflanzlichem oder Neutralöl.

Die Erfindung schließt auch die Verwendung der Phospholipidkonzentrate als Hilfsstoff zum Herstellen und Austragen von Pflanzenschutzmittel enthaltenden wässerigen Spritzbrühen ein.

Vorzugsweise enthalten die Phospholipidkonzentrate 20-60 Gew.% der Phospholipide gemäß a).

Besonders bevorzugt sind Phospholipidmischungen aus Phosphatidylcholin, Phosphatidylethanolamin, N-Acylphosphatidylethanolamin und weiteren Phosphatiden. Eine solche Mischung besteht aus

10-60 Gew.% Phosphatidylcholin,
10-40 Gew.% Phosphatidylethanolamin,
10-40 Gew.% N-Acylphosphatidylethanolamin und
 3-10 Gew.% sonstigen Phosphatiden,

bezogen auf Gesamtmenge Phospholipidmischung.

Die Mischung kann aber auch folgende Zusammensetzung haben :

10-50 Gew.% Phosphatidylcholin,
10-30 Gew.% Phosphatidylethanolamin,
10-30 Gew.% N-Acylphosphatidylethanolamin und
 3-30 Gew.% sonstigen Phosphatiden,

bezogen auf Gesamtmenge Phospholipidmischung.

2

Vorzugsweise beträgt der Gehalt an sonstigen Phosphatiden jedoch nicht mehr als 10 Gew.%.

Als N-Acyl-phosphatidylethanolamine werden insbesondere diejenigen verwendet, in denen die Acylgruppe von gesättigten oder olefinisch ungesättigten Fettsäuren mit 2-20 C-Atomen, vorzugsweise gesättigten mit 2-5 C-Atomen oder den gesättigten oder einmal olefinisch ungesättigten mit 14, 16, 18 oder 20 C-Atomen abgeleitet ist.

Um eine flüssige Zubereitung zu erreichen, werden physiologisch unbedenkliche organische Lösungsmittel bzw. Lösungsmittelgemische eingesetzt. Als Lösungsmittel können verwendet werden Alkohol oder Ether, wie beispielsweise Methanol, Ethanol, Propanol, Isopropanol, Butanol, Isobutanol, tert. Butanol, sec. Butanol, Ethylenglykol, Ethylenglykolmonoethylether, Ethylenglykolmonomethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Polypropylenglykole, Polypropylenglykolmonomethylether, Polypropylenglykolmonoethylether, Propylenglykolmethylether, Propylenglykoldiethylether, Butylenglykol, Tetrahydrofuran, Dioxan, Dimethylsulfoxid, 3,5,5-Trimethyl-2-cyclohexen-1-on. Bevorzugte Lösungsmittel sind das zuletzt genannte, $C_1$-$C_4$-Alkylalkohole, Dimethylsulfoxid, Ethylenglykolmonoethylether oder Mischungen davon. Als nichtionogener Co-Emulgator werden Ethoxylate von Fettalkoholen bzw. hydriertem Ricinusöl bzw. Nonylphenol oder Fettsäureamide verwendet.

Als Lösungsvermittler werden Sorbitanfettsäureester, Triglycerid- oder Partialglyceridgemische gesättigter Fettsäuren, Hydroxyethylamide, wie N-(2-Hydroxyethyl)capronsäureamid, N-(2-Hydroxyethyl)valeriansäureamid, N-(2-Hydroxyethyl)heptansäureamid verwendet.

Außerdem enthält die erfindungsgemäße Zusammensetzung noch Glycerin.

Neben diesen für das Einbringverhalten in wäßrige Systeme wesentlichen Komponenten können die erfindungsgemäßen Konzentrate auch noch Anteile an Wasser und/oder pflanzlichen Ölen oder Neutralöl enthalten, wodurch das Einbringen in wäßrige Systeme noch zusätzlich erleichtert wird.

Die erfindungsgemäßen Phospholipidkonzentrate werden hergestellt, indem man das Lösungsmittel, Glycerin und die Co-Emulgatoren sowie die Lösungsvermittler zunächst bei Raumtemperatur oder leicht erhöhter Temperatur mischt. Anschließend wird das Phospholipid zugefügt und so lange bei ca. 20 °C gerührt, bis eine homogene Zubereitung entstanden ist. Wasser und pflanzliche Öle werden zuletzt unter Rühren langsam zugesetzt und in das Konzentrat eingearbeitet.

Die Zusammensetzung der erfindungsgemäßen Phospholipidkonzentrate wird durch die folgenden Beispiele noch näher erläutert.

## Beispiel 1

Zusammensetzung des Phospholipidkonzentrats :

40 Gew.% Phospholipidgemisch aus :

| | |
|---|---|
| Phosphatidylcholin | 40 % |
| Phosphatidylethanolamin | 30 % |
| N-Acylphosphatidylethanolamin | 25 % |
| sonstige Phosphatide | 5 % |

35 Gew.% 3,5,5-Trimethyl-2-cyclohexen-1-on
15 Gew.% Glycerin
 5 Gew.% Nonylphenolethoxylat
 5 Gew.% N-(2-Hydroxyethyl)-capronsäureamid

Zunächst werden 3,5,5-Trimethyl-2-cyclohexen-1-on, Glycerin, Nonylphenolethoxylat und N-(2-Hydroxyethyl)-capronsäureamid miteinander vermischt und dann das Phospholipidgemisch eingetragen und weiter gerührt, bis eine homogene Zubereitung erreicht ist.

## Beispiel 2

Phospholipidkonzentratzusammensetzung

26,6 Gew.% Phospholipidgemisch aus :

| | |
|---|---|
| Phosphatidylcholin | 42 % |
| Phosphatidylethanolamin | 25 % |
| N-Acylphosphatidylethanolamin | 25 % |
| sonstige Phosphatide | 8 % |

10  Gew.% Glycerin
23,4 Gew.% 3,5,5-Trimethyl-2-cyclohexen-1-on
 3,3 Gew.% Ricinusöl, ethoxyliert
 3,3 Gew.% Sorbitanmonopalmitat

13,4 Gew.% Wasser
20  Gew.% Pflanzenöl oder Neutralöl

## Beispiel 3

Phospholipidkonzentratzusammensetzung

40 Gew.% Phospholipidgemisch aus :

| | |
|---|---|
| Phosphatidylcholin | 45 % |
| Phosphatidylethanolamin | 25 % |
| N-Acylphosphatidylethanolamin | 21 % |
| sonstige Phosphatide | 9 % |

5 Gew.% 3,5,5-Trimethyl-2-cyclohexen-1-on
15 Gew.% Glycerin
30 Gew.% Nonylphenolethoxylat
10 Gew.% Sorbitanmonolaurat

## Beispiel 4

Phospholipidkonzentratzusammensetzung

32 Gew.% Phospholipidgemisch aus :

| | |
|---|---|
| Phosphatidylcholin | 40 % |
| Phosphatidylethanolamin | 28 % |
| N-Acylphosphatidylethanolamin | 27 % |
| sonstige Phosphatide | 5 % |

15 Gew.% Glycerin
35 Gew.% 3,5,5-Trimethyl-2-cyclohexen-1-on
 5 Gew.% Polyoxyethylenglykolmonooleat
 5 Gew.% Sorbitanmonooleat
 8 Gew.% Ethanol

Die erfindungsgemäßen Phospholipidkonzentrate eignen sich insbesondere als Hilfsstoffe zum Ansetzen und Austragen von Pflanzenschutzmittel enthaltenden wäsrigen Spritzbrühen.

Pflanzenschutzmittel zur Bekämpfung von Schädlingen und Unkräutern werden heute wegen der einfachen Handhabung bei Transport, Lagerung und Verwendung als Wirkstoffkonzentrate in Form von Emulsionen (EC), Suspensionen (SC), Lösungen (LC) oder leicht benetzbaren Pulvern (BP) in den Handel gebracht und in der Regel in flüssiger Form, z. B. als Lösungen, Suspensionen oder Emulsionen, ausgetragen. Dazu werden die Konzentrate vor dem Ausbringen mit der von den Herstellern vorgeschriebenen Menge an Wasser verdünnt oder benetzt und dann als sogenannte Spritzbrühen mit üblichen Geräten von Land oder auch aus der Luft versprüht.

Die meisten Spritzbrühen haben den Nachteil, daß mit den bekannten Spritzvorrichtungen nur so kleine Tröpfchen erzeugt werden können, daß der erzeugte Sprühnebel, insbesondere durch Windeinwirkung, abgetrieben wird und die zu behandelnden landwirtschaftlichen Flächen nicht ausreichend benetzt und zusätzliche Gebiete besprüht werden.

Von Bedeutung ist weiterhin die direkte Abtrift von aufgebrachten Pflanzenschutzmitteln, die infolge ihrer Flüchtigkeit wieder teilweise verdampfen und durch den Austausch von Luftmassen mit dem Wind auf benachbarte Gebiete abgetrieben werden. Je nach Flüchtigkeit der Präparate sind deshalb entsprechend höhere Dosierungen erforderlich, um noch ausreichende Wirkstoffmengen auf den Zielflächen zu behalten.

Beide Formen der Abtrift stellen unnötige Umweltbelastungen dar und häufig treten auf den eigentlich nicht zu behandelnden Flächen durch die ausgetragenen Wirkstoffe Schäden der dort vorhandenen Vegetation oder Fauna auf, so daß sich an sich notwendige Spritzbehandlungen bei Vorliegen ungünstiger klimatischer Bedingungen nicht zum richtigen Zeitpunkt ausführen lassen.

Verwendet man die erfindungsgemäßen Phospholipidkonzentrate als zusätzliche Hilfsstoffe beim Ansetzen der Pflanzenschutzmittelspritzbrühen, wird das Ausbringen erheblich erleichtert, und es entstehen stabile Tröpfchen mit geringem Anteil an kleinen Tröpfchen unter 200 Mikrometer, so daß sich die Abtrift erheblich verringert. Durch den Zusatz der Phospholipidkonzentrate wird außerdem das Herstellen der Spritzbrühen erheblich erleichtert.

Dabei kann man so vorgehen, daß man handelsübliche Wirkstoffkonzentrate zunächst mit Wasser verdünnt, danach ein Phospholipidkonzentrat in die Mischung einbringt. Es ist jedoch auch möglich, handelsübliche Wirkstoffkonzentrate und die erfindungsgemäßen Phospholipidkonzentrate zunächst jeweils mit Wasser zu Spritzbrühen zu verdünnen und die verdünnten Brühen vor dem Verspritzen miteinander zu mischen. Bei flüssigen Wirkstoffkonzentraten ist es auch möglich, die handelsüblichen Wirkstoffkonzentrate zunächst mit den erfindungsgemäßen Phospholipidkonzentraten zu mischen, und die Mischung danach mit Wasser zu verdünnen, um eine Spritzbrühe zu bilden.

Phospholipidkonzentrat wird in einer solchen Menge verwendet, daß das Gewichtsverhältnis von Wirkstoff : Phospholipid von 1 : 0,5 bis 1 : 5, vorzugsweise 1 : 1 bis 1 : 2, beträgt.

Bei den Wirkstoffen handelt es sich um Pflanzenschutzmittel in üblichen Lösungs-, Emulsions-, Suspensions konzentraten oder benetzbaren Pulvern mit herbiziden, fungiziden, insektiziden, acariziden oder nematiziden Wirkstoffen.

Vergleichsversuch

1. Mischung der japanischen Patentveröffentlichung J 5 6070-826

0,3 g Lecithin
0,2 g Sorbitolmonooleat
5,0 g Olivenöl
2,5 g Glycerin
2,5 g Sorbitol

werden gemischt, es entsteht ein transparentes Gel.

2. Mischung der Zusammensetzung nach erfindungsgemäßem Beispiel 2

Arbeitsweise :

1. Handelsprodukt des Pflanzenschutzmittels wird in Wasser gelöst und die Phospholipidmischung dazugegeben.

2. Phospholipidmischung wird in Wasser gegeben, das Handelsprodukt des Pflanzenschutzmittels dazugemischt.

3. Handelsprodukt des Pflanzenschutzmittels und Phospholipidmischung werden gemeinsam in Wasser eingerührt.

4. Handelsprodukt des Pflanzenschutzmittels und Phospholipidmischung werden getrennt in Wasser eingerührt und anschließend zusammengegeben.

Gemäß der Arbeitsweisen 1-4 wurden Spritzbrühen von jeweils 100 ml hergestellt, die 0,1 g Triadimefon als Wirkstoff und 0,5 g der Phospholipidmischung gemäß der japanischen Anmeldung oder der erfindungsgemäßen enthalten.

Mit der erfindungsgemäßen Phospholipidmischung wurden nach allen vier Arbeitsweisen stabile, homogene Spritzbrühen erhalten.

Mit der Phospholipidmischung nach dem Stand der Technik war Arbeitsweise 2 und 4 nicht durchführbar, da sich das Gel mit Wasser nicht anrühren ließ. Nach Arbeitsweise 1 und 3 ließen sich keine homogenen Spritzbrühen herstellen und waren somit für eine Anwendung unbrauchbar.

Besonders bewährt hat sich die Kombination der erfindungsgemäßen Phospholipidkonzentrate mit folgenden Wirkstoffen :

| Wirkstoff | Konzentratform | Wirkstoffkonzentration in der Spritzbrühe in mg/l |
|---|---|---|
| **Fungizide** | | |
| Triadimefon | Spritzpulver | 250 |
| Kupferoxychlorid | benetzbares Pulver | 1350 |
| Propineb | benetzbares Pulver | 1400 |
| Procymidone | benetzbares Pulver | 375 |
| Netz-Schwefel | benetzbares Pulver | 2000 |
| **Herbizide** | | |
| Glyphosat | wäßrige Lösung | 4800 |
| Linuron | Spritzpulver | 1763 |

## 0 098 561

(Fortsetzung)

| Wirkstoff | Konzentratform | Wirkstoffkonzentration in der Spritzbrühe in mg/l |
|---|---|---|
| Terbuthylazin | Suspension | 10000 |
| Flampropisopropyl | Emulsion | 1750 |
| Trifluralin | Emulsion | 3216 |
| Dinoseb-acetat | Emulsion | 4920 |
| Chlormequatchlorid | wäßrige Lösung | 7800 |
| Chloridazon | Suspension | 6450 |
| Isoproturon | benetzbares Pulver | 5025 |
| Alloxydim-Na | lösliches Pulver | 6563 |
| Atrazin | benetzbares Pulver | 3600 |
| Insektizide | | |
| Malathion | Emulsion | 20400 |
| Propoxur | Emulsion | 400 |
| Permethrin | Emulsion | 225 |
| Cypermethrin | Emulsion | 240 |
| Heptenophos | Emulsion | 1000 |

Für die vorstehend durch die international üblichen Kurzbezeichnungen identifizierten Pflanzenschutzmittel werden nachfolgend noch die chemischen Bezeichnungen angegeben.

| Kurzbezeichnung | Chemische Bezeichnung |
|---|---|
| Triadimefon | 1-(4-Chlorphenoxy)-3,3-dimethyl-1-(1,2,4-triazol-1-yl)-butanon |
| Propineb | Zink-propylenbis (dithiocarbamat) |
| Procymidone | N-(3,5-Dichlorphenyl)-1,2-dimethylcyclopropan-1,2-dicarboximid |
| Glyphosat | N-Phosphon-methylglycin |
| Linuron | N-(3,4-Dichlorphenyl)-N'-methoxy-N'-methylharnstoff |
| Terbuthylazin | 2-Chlor-4-tert.butyl-amino-6-ethylamino-1,3,5-triazin |
| Flampropisopropyl | 2-(N-Benzo-3-chlor-4-flurphenylamino)-propionsäure-isopropylester |
| Trifluralin | 2,6-Dinitro-N,N-dipropyl-4-triflurmethyl-anilin |
| Dinoseb-acetat | 2-sec.Butyl-4,6-dinitrophenyl-acetat |
| Chlormequatchlorid | 2-Chlorethyltrimethylammoniumchlorid |
| Chloridazon | 5-Amino-4-chlor-2-phenylpyridazin-3-on |
| Isoproturon | 3-(4-Isopropylphenyl)-1,1-dimethylharnstoff |
| Alloxydim-Na | 2,1-(N-Alloxyaminobutyliden-4-methoxycarbonyl)-5,5-dimethylcyclohexan-1,3-dien-Natriumsalz |
| Atrazin | 2-Chlor-4-ethylamino-6-isopropylamino-1,3,5-triazin |
| Malation | S-1,2-Bis(ethoxycarbonyl)ethyl-O,O-dimethyl-phosphorodithioat |
| Propoxur | 2-Isopropoxyphenylmethylcarbamat |
| Permethrin | 3-Phenoxyphenylmethyl-3-(2,2-dichlorethenyl)-2,2-dimethylcyclopropan-carboxylat |
| Cypermethrin | N-Cyano-3-phenoxybenzyl-3-(2,2-dichlorethenyl)-2,2-dimethylcyclopropan-carboxylat |
| Heptenophos | 7-Chlorbicyclo/3,2,0/-hepta-2,6-dien-6-yl-dimethylphosphat |

## Patentansprüche

1. Als Hilfsstoff zum Herstellen und Austragen von Pflanzenschutzmittel-Spritzbrühen geeignetes Phospholipidkonzentrat bestehend aus

a) 5-60 Gew.% natürlichem oder synthetischem Phospholipid aus der Gruppe Phosphatidylcholin, hydriertes Phosphatidylcholin, Phosphatidylethanolamin, N-Acylphosphatidylethanolamin, Phosphatidylinosit, Phosphatidylserin und Phosphatidylglycerol, Phosphatidsäure und Gemische solcher Produkte,

b) 5-62,5 Gew.% physiologisch unbedenklichen Lösungsmittel aus der Gruppe $C_1$-$C_4$ Alkylalkohole, Ethylenglykolmonoethylether, Ethylenglykolmonomethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Polypropylenglykole, Polypropylenglykolmonomethylether, Polypropylenglykolmonoethylether, Propylenglykolmethylether, Propylenglykoldiethylether, Ethylenglykol, Butylenglykol, 3,5,5-Trimethyl-2-cyclohexen-1-on, Tetrahydrofuran, Dioxan, Dimethylsulfoxid oder einem Gemisch solcher Lösungsmittel,

c) bis zu 30 Gew.% nicht-ionogener Co-Emulgator aus der Gruppe Ethoxylate von Fettalkoholen, hydriertem Rizinusöl, Nonylphenol oder Fettsäureamiden,

d) bis zu 35 Gew.% Lösungsvermittler aus der Gruppe Sorbitanfettsäureester, Triglycerid- oder Partialglyceridgemisch gesättigter Fettsäuren und Hydroxyethylamide,

wobei die Komponenten c) und d) als wesentliche Komponenten für das Einbringverhalten in wässerige Systeme anwesend sind und

e) 10-23 Gew.% Glycerin und gegebenenfalls

f) bis zu 15 Gew.% Wasser und bzw. oder

g) bis zu 25 Gew.% pflanzlichen oder Neutralöl.

2. Phospholipidkonzentrat nach Anspruch 1, dadurch gekennzeichnet, daß es als Phospholipide eine Mischung aus

10-60 Gew.% Phosphatidylcholin

10-40 Gew.% Phosphatidylethanolamin

10-40 Gew.% N-Acylphosphatidylethanolamin und

3-10 Gew.% sonstige Phosphatide aus der Gruppe a) von Anspruch 1 bezogen auf Gesamtmenge Phospholipid enthält.

3. Verwendung der Phospholipidkonzentrate nach Ansprüchen 1 oder 2 als Hilfsstoff zum Herstellen und Austragen von Pflanzenschutzmittel enthaltenden wässerigen Spritzbrühen.

**Claims**

1. A phospholipid concentrate suitable as an auxiliary for the preparation and application of spray liquors of plant protection agents and consisting of

a) from 5 to 60 % by weight of natural or synthetic phospholipid from the group comprising phosphatidylcholine, hydrogenated phosphatidylcholine, phosphatidyl ethanolamine, N-acylphosphatidyl ethanolamine, phosphatidyl inositol, phosphatidyl serine and phosphatidyl glycerol, phosphatidic acid and mixtures of these products,

b) from 5 to 62.5 % by weight of physiologically safe solvents from the group comprising $C_1$-$C_4$ alkyl-alcohols, ethylene glycol monomethylether, ethylene glycol monoethylether, ethylene glycol dimethylether, ethylene glycol diethylether, diethylene glycol dimethylether, diethylene glycol monoethylether, diethylene glycol monomethyl ether, diethylene glycol propylether, diethylene glycol diethylether, polyethylene glycol, polypropylene glycols, polypropylene glycol monomethylether, polypropylene glycol monoethylether, propylene glycol methylether, propylene glycol diethylether, ethylene glycol, butylene glycol, 3,5,5-trimethyl-2-cyclohexen-1-one, tetrahydrofuran, dioxane, dimethyl sulfoxide or a mixture of these solvents,

c) up to 30 % by weight of non-ionic co-emulsifiers from the group comprising ethoxylates of fatty alcohols, hydrogenated castor oil, nonylphenol or fatty acid amides,

d) up to 35 % by weight of solution promoters from the group comprising sorbitan fatty acid esters, triglyceride or partial glyceride mixtures of saturated fatty acids and hydroxyethylamides,

components c) and d) being present as essential components for the introduction behavior into aqueous systems, and

e) from 10 to 23 % by weight of glycerol and, optionally,

f) up to 15 % by weight of water and/or

g) up to 25 % by weight vegetable or neutral oil.

2. A phospholipid concentrate as claimed in Claim 1, characterized in that it contains as phospholipids a mixture of

from 10 to 60 % by weight phosphatidylcholine,

from 10 to 40 % by weight phosphatidylethanolamine,

from 10 to 40 % by weight N-acylphosphatidylethanolamine and

from 3 to 10 % by weight other phosphatides from the group a) of Claim 1, based on the total quantity of phospholipid.

7

3. The use of the phospholipid concentrates claimed in Claim 1 or 2 as an auxiliary for the preparation and application of aqueous spray liquors containing plant protection agents.

**Revendications**

1. Concentré de phospholipides apte à servir d'adjuvant pour la préparation et l'épandage de bouillons de pulvérisation d'agents phytosanitaires, constitué de :

a) 5-60 % en poids d'un phospholipide naturel ou synthétique appartenant au groupe formé par la phosphatidylcholine, la phosphatidylcholine hydrogénée, la phosphatidyléthanolamine, la N-acylphosphatidyléthanolamine, le phosphatidylinositol, la phosphatidylsérine et le phosphatidylglycérol, de l'acide phosphatidique et de mélanges de tels produits,

b) 5-62,5 % en poids d'un solvant physiologiquement sans danger et appartenant au groupe formé par les (alkyl en $C_1$-$C_4$) alcools, le monoéthyléther de l'éthylèneglycol, le monoéthyléther de l'éthylèneglycol, le diméthyléther de l'éthylèneglycol, le diéthyléther de l'éthylèneglycol, le diméthyléther du diéthylèneglycol, le monoéthyléther du diéthylèneglycol, le monométhyléther du diéthylèneglycol, le propyléther du diéthylèneglycol, le diéthyléther du diéthylèneglycol, le polyéthylèneglycol, les polypropylèneglycols, le monométhyléther du polypropylèneglycol, le monoéthyléther du polypropylèneglycol, le méthyléther du propylèneglycol, le diéthyléther du propylèneglycol, l'éthylèneglycol, le butylèneglycol, le triméthyl-3,5,5 cyclohexène-2 one-1, le tétrahydrofuranne, le dioxanne, le diméthylsulfoxyde et les mélanges de tels solvants,

c) jusqu'à 30 % en poids d'un co-émulsifiant non-ionique appartenant au groupe des éthoxylates d'alcools gras, de l'huile de ricin hydrogénée, du nonylphénol ou des amides d'acides gras,

d) jusqu'à 35 % en poids d'un agent de solubilisation appartenant au groupe formé par les esters d'acides gras du sorbitan, les mélanges de triglycérides ou de glycérides partiels d'acides gras saturés et les hydroxyéthylamides, les composants c) et d) étant présents en tant que composants essentiels pour le comportement de mise en œuvre dans des systèmes aqueux ; et

e) 10-23 % en poids de glycérol ; et éventuellement

f) jusqu'à 15 % en poids d'eau et/ou

g) jusqu'à 25 % en poids d'huile végétale ou neutre.

2. Concentré de phospholipides selon la revendication 1, caractérisé en ce qu'il contient, comme phospholipides, un mélange de :

10-60 % en poids de phosphatidylcholine,

10-40 % en poids de phosphatidyléthanolamine,

10-40 % en poids de N-acylphosphatidyléthanolamine, et

3-10 % en poids d'autres phosphatides appartenant au groupe a) de la revendication 1, par rapport à la quantité totale de phospholipides.

3. Utilisation des concentrés de phospholipides selon les revendications 1 ou 2, en tant qu'adjuvant pour la préparation et l'épandage de bouillons aqueux de pulvérisation contenant des agents phytosanitaires.